Europäisches Patentamt

(19) European Patent Office

Office européen des brevets

(11) Publication number: **0 114 713**
**B1**

## (12) EUROPEAN PATENT SPECIFICATION

(45) Date of publication of patent specification: **23.09.87**

(51) Int. Cl.⁴: **H 04 N 5/72**

(21) Application number: **84200061.4**

(22) Date of filing: **19.01.84**

(54) **Display panel.**

(30) Priority: **21.01.83 US 459975**

(43) Date of publication of application:
**01.08.84 Bulletin 84/31**

(45) Publication of the grant of the patent:
**23.09.87 Bulletin 87/39**

(84) Designated Contracting States:
**AT BE CH DE FR GB IT LI LU NL SE**

(56) References cited:
**EP-A-0 074 696**
**DE-A-1 512 126**

(73) Proprietor: **Kreon Screen International B.V.**
**Graaf Lodewijkstraat 14**
**NL-2514 AR Nieuwerbrug a/d Rijn (NL)**

(72) Inventor: **Schreiber, Craig Allen**
**Jan Steenstraat 22**
**NL-5684 AK Best (NL)**

(74) Representative: **Noz, Franciscus Xaverius, Ir.**
**et al**
**Boschdijk 155**
**NL-5612 HB Eindhoven (NL)**

Courier Press, Leamington Spa, England.

EP 0 114 713 B1

## Description

The present invention is directed to a display panel comprising a · plurality of adjacently arranged cathode ray tubes, so that respective display surfaces together define a display surface of said display panel and display discontinuities in particular formed by spaces between the display surfaces of the adjacent cathode ray tubes are present.

Such a panel is described in EP—A—0 074 696 (regarding novelty to be considered as comprised in the state of the art by virtue of article 54(3) EPC), published on March 23, 1983 and claiming a priority of September 10, 1981.

The above display panel is intended for a display system for displaying information inclusive picture information such as conventional television pictures. In particular in information display systems of the aforementioned nature picture information can be combined with alphanumerical information. Briefly said each kind of video information can be displayed on the large screen or display surface of the display panel. The display surface of the display panel may vary between for example 2 m² and 200 m², whilst the depth of the display panel remains the same, for example 0.5 m independently of the size of the display panel. The cathode ray tubes with their display surfaces making up the display surface of the display panel are arranged side by side in frame.

When for instance the display panel is used to display a television picture, so that each cathode ray tube of the display panel displays a corresponding part of the television picture, the visual impression that the display panel functions as a single screen is affected by display discontinuities inter alia resulting from the side by side arrangement of the cathode ray tubes, because the display surface of the display panel is formed by the respective discrete surfaces of the cathode ray tubes. The above display discontinuities can be minimized by disposing the cathode ray tubes as near as possible in the frame. For that matter, the discontinuities in smaller display panels will be more disturbing than in large display panels, since the viewing distance from the display panel is larger in the latter case.

A further problem of the above display panel may reside in that, as is known, the face plates of the cathode ray tubes are curved. This problem is particularly involved when the cathode ray tubes are mounted in a frame, so to say in a flat plane.

An object of the present invention is to obviate the above problems in order to achieve a perfection of the visual impression of the display panel as a single screen.

The present invention provides for a display panel of the nature described in the preamble, which is characterized in that to the outside surface of the face plate of each cathode ray tube light guides are provided, so that the input opening of each light guide is normal to a respective part of the face plate of a corresponding cathode ray tube and the output opening of each light guide is normal to a respective part of a transformed panel display surface determined by the output openings of all light guides, whereby said light guides are shaped so that the transformed panel display surface is substantially continuous.

Now the present invention will be explained on the basis of an explanatory embodiment and by referring to the drawing, wherein:

Fig. 1 is a front view of the display panel whereto the present invention is directed;

Fig. 2 shows a part of a wedge shaped optical member according to the present invention;

Fig. 3 is a front view of a part of the display panel, wherein the wedge shaped optical members are attached to the cathode ray tubes of the display panel; and

Fig. 4 shows a sectional view of a part of the display panel, wherein the wedge shaped optical members are applied to the face plates of the cathode ray tubes thereof.

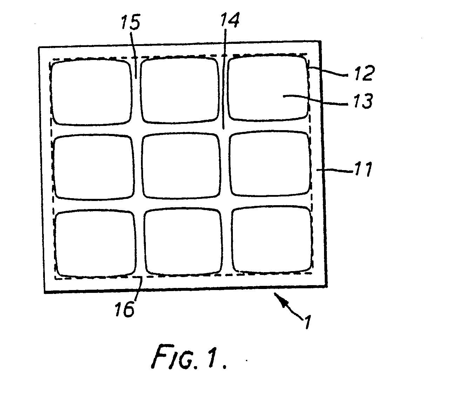

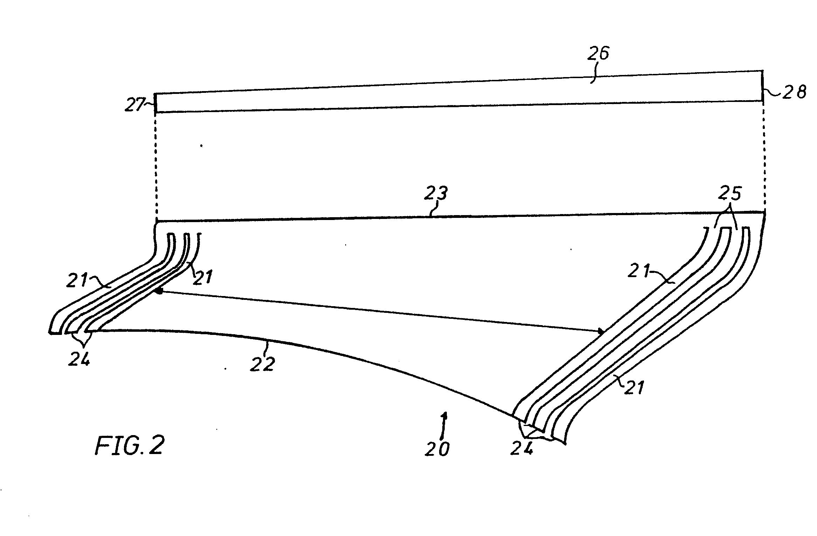

The display panel, whereto the present invention is related is shown in Fig. 1 of the drawing and is designated by the reference numeral 1. By way of example the display panel 1 of Fig. 2 comprises nine cathode ray tubes 12, which are arranged in a side-by-side arrangement or adjacently to form a matrix of cathode ray tube display surfaces. The present invention is concerned with the perfection of the visual impression, that is to say, the impression that the display panel 1 functions as a single screen, whilst the display surface 16 of the display panel 1 is formed by the respective discrete surfaces 13 of the cathode ray tubes 12. Besides in Fig. 1 a part of the frame is designated by the reference numeral 11. The aforementioned perfection of the visual impression of the display panel 1 involves that a solution has to be found for the display discontinuities 14 and 15 resulting from the side-by-side arrangement of the cathode ray tubes 12, and preferably also for the display continuities formed by the display surfaces 13 of the cathode ray tubes 12 at the periphery of the display surface 16 of the display panel 1.

Further, and as mentioned earlier, a solution has to be found for the problem that the face plates of the cathode ray tubes are curved, whilst said cathode ray tubes are mounted in a flat plane.

According to the present invention a solution for the above mentioned problems is found in the application of wedge shaped optical members, whereof a part is shown in Fig. 2. The wedge shaped optical member 20 consists of a plurality of serpentine or elongated S-shaped light guides 21, which on one side 22 engage the face plate of the respective cathode ray tube, whilst the other side determines a part of a transformed display surface of the display panel. Therefore one side 22 of the wedge shaped optical member 20 is curved, in conformity with the curvature of the face plate of the cathode ray tube, whilst the other side 23 is linear in order to obtain a flat transformed display surface of the display panel. The input opening 24 of each light guide 21 is normal to the corresponding part of the curved face plate of the cathode ray tube, whilst the output opening 25 of each light guide 21 is normal to the transformed display panel surface.

Although in the shown embodiment the light guides are serpentine or elongated S-shaped this, although forming a preferred embodiment, is not necessary. Necessary is that to the outside surface of the face plate of each cathode ray tube light guides are provided, so that the input opening of each light guide is normal to a respective part of the face plate of a corresponding cathode ray tube and the output opening of each light guide is normal to a respective part of a transformed panel display surface determined by the output openings of all light guides, whereby said light guides are shaped so, that the transformed display panel surface is substantially continuous and preferably flat.

In Fig. 2 also is shown side 23 in longitudinal section 26, whereby the wedge shape of said optical member 20 can be seen and whereby the end 28 is longer than the opposing end 27.

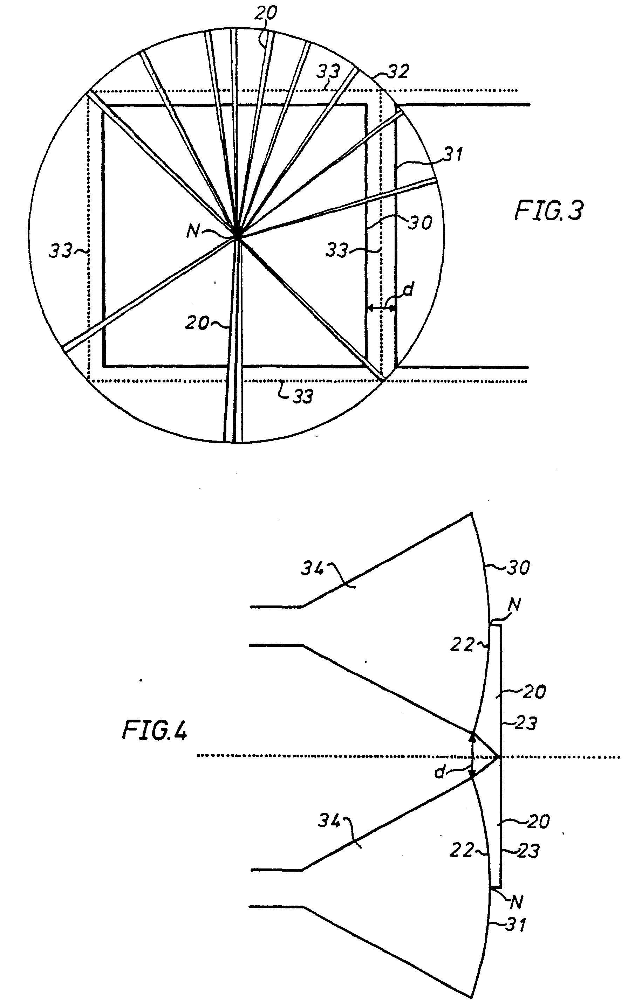

Now referring to Fig. 3 it will be explained in what manner the wedge shaped optical members 20 are applied to the face plate of the cathode ray tube in order to remove said above two problems.

In Fig. 3 the face plate of a predetermined cathode ray tube of the display panel is indicated by the reference numeral 30, whilst the face plate of the adjacent cathode ray tube is indicated by the reference numeral 31. The display discontinuity or gap existing between said face plates 30 and 31 is indicated by the reference symbol d. Although the application of the wedge shaped optical members 20 to the cathode ray tubes is described with respect to a particular face plate 30, it should be understood that the same operation should be applied to all face plates of the cathode ray tubes of the display panel. Further said operation may be carried out either to the cathode ray tubes separately or to each cathode ray tube when mounted in a frame.

From the center N of the face plate 30 a plurality of wedge shaped optical members 20 are placed radially and side-by-side on said face plate and may be attached thereto by preferably an adhesive agent such as a suitable glue. In fact the spherical surface of the face plate is transformed thereby in a flat surface, bounded by a circle 32.

Assuming that the discontinuities between the cathode ray tubes are gaps d between the face plates, the wedge shaped optical members 20 should for example cover half said gaps d is to say, should extend to the dotted lines 33. Therefore after the application of the wedge shaped optical members to the face plate, the same are cut, so that the circular boundary is transformed into a rectangular boundary.

Eventually in Fig. 4 the filling up of a gap d between two cathode ray tubes is shown in section. Reference numeral 34 indicates the cathode ray tubes, whilst the reference numeral 30 indicates the face plate of one of those cathode ray tubes and reference numeral 31 indicates the face plate of the other cathode ray tube. With the reference numeral 20 the wedge shaped optical members are indicated and again the middlepoint of the face plate 30 is indicated by the reference symbol N.

The application of the above mentioned wedge shaped optical members is to be preferred with regard to separate light guides, since viewed along the radius from the middlepoint N the thicknesses of the light guides have to increase it is cumbersome to attach all those light guides having different thicknesses in a correct manner to the face plate of the corresponding cathode ray tube. By using said wedge shaped optical members said light guides having distinct thicknesses are already mounted in the correct order and an advantage is that only one kind of wedge shaped optical members has to be used, for instance 360 of the same wedge shaped optical members can be used to transform the display surface of the cathode ray tube to a larger flat rectangular display surface. This implies that the wedge shaped optical members per se form a part of the present invention.

The figures used in the claims are only meant to explain more clearly the intention of the invention and are not supposed to be any restriction concerning the interpretation of the invention.

**Claims**

1. A display panel (1) comprising a plurality of adjacently arranged cathode ray tubes (12, 34), so that respective display surfaces (13) together define a display surface (16) of said display panel (1) and display discontinuities (14, 15) in particular formed by spaces (d) between the display surfaces (13) of the adjacent cathode ray tubes (12, 34) are present, wherein to the outside surface of the face plate (30, 31) of each cathode ray tube (12, 34) light guides (21) are provided, so that the input opening (24) of each light guide (21) is normal to a respective part of the face plate (30, 31) of a corresponding cathode ray tube (12, 34) and the output opening (25) of each light guide (21) is normal to a respective part of a transformed panel display surface (23, 26) determined by the output openings (25) of all light guides (21), whereby said light guides (21) are shaped so that the transformed panel display surface is substantially continuous.

2. A display panel according to claim 1, characterized in that the light guides (21) are serpentine or elongated S-shaped.

3. A display panel according to claim 1 or claim 2, characterized in that said light guides (21) are arranged radially from the center (N) of the face plate (30, 31) towards the periphery of the face plate (30, 31), whereby the thicknesses of said light guides (21) along a radius increase in the direction of the periphery of the face plate (30, 31).

4. A display panel according to claim 3, characterized in that the light guides (21) to be provided along a radius from the center (N) of the respective face plate (30, 31) to the periphery thereof, are contained in an optical member (20) having a wedge shaped longitudinal section, whereby one side (23) of said optical member comprising the output openings (25) of the light guides (21) contained therein is linear and the other side (22) comprising the input openings (24) of the light guides (21) contained therein is curved in conformity with the curvature of the face plate (30, 31) of the respective cathode ray tube (12, 34).

5. A method of preparing a cathode ray tube (12, 34) to be used in the display panel (1) according to claim 4, characterized in that a plurality of said wedge shaped optical members (20) are attached to the outside surface (30, 31) of the cathode ray tube (12, 34) by means of an adhesive agent radially from the center (N) of said cathode ray tube (12, 34) to the periphery thereof in a side by side relation and that the ends (28) of said wedge shaped optical members (20) forming a circle (32) are cut so that they determine a rectangle (33) covering at least a part of the display discontinuities (d) surrounding the relative cathode ray tube (12, 34) when placed in adjacent relation with other cathode ray tubes (12, 34) of the display panel (1).

6. An optical member (20) as defined in claim 4, to be used with the display panel (1) of any one of the claims 1—4.

## Patentansprüche

1. Anzeigetafel (1) mit mehreren benachbart angeordneten Kathodenstrahlröhren (12, 34), so daß die entsprechenden Anzeigeflächen (13) zusammen eine Anzeigefläche (16) der Anzeigetafel (1) bilden und daß Anzeigelücken (14, 15) vorhanden sind, die insbesondere gebildet werden durch die Abstände (d) zwischen den Anzeigeflächen (13) der benachbarten Kathodenstrahlröhren (12, 34), dadurch gekennzeichnet, daß für die Außenfläche der Schirmplatte (30, 31) jeder Kathodenstrahlröhre (12, 34) Lichtleiter (21) vorgesehen sind, derart, daß die Eintrittsöffnung (24) jedes Lichtleiters (21) senkrecht zu einem entsprechenden Teil der Schirmplatte (30, 31) einer entsprechenden Kathodenstrahlröhre (12, 34) und die Austrittsöffnung (25) jedes Lichtleiters (21) senkrecht zu einem entsprechenden Teil einer transformierten Tafelanzeigefläche (23, 26) angeordnet ist, die bestimmt ist durch die Austrittöffnungen (25) sämtlicher Lichtleiter (21), wobei die Lichtleiter so gestaltet sind, daß die transformierte Tafelanzeigefläche im wesentlichen stetig ausgebildet ist.

2. Anzeigetafel nach Anspruch 1, dadurch gekennzeichnet, daß die Lichtleiter (21) schlangenförmig oder S-förmig gestreckt gestaltet sind.

3. Anzeigetafel nach Anspruch 1 oder 2, dadurch gekennzeichnet, daß die Lichtleiter (21) radial vom Zentrum (N) der Schirmplatte (30, 31) zur Peripherie der Schirmplatte (30, 31) verlaufend angeordnet sind, wobei die Stärke der Lichtleiter (21) in radialer Richtung in Richtung auf die Peripherie der Schirmplatte (30, 31) zunimmt.

4. Anzeigetafel nach Anspruch 3, dadurch gekennzeichnet, daß die in radialer Richtung vom Zentrum (N) der entsprechenden Schirmplatte (30, 31) zur Peripherie derselben angeordneten Lichtleiter (21) in einem optischen Element (20) angeordnet sind, das einen keilförmigen länglichen Abschnitt aufweist, wobei eine Seite (23) des optischen Elementes, das die Austrittsöffnungen der darin angeordneten Lichtleiter (21) aufweist, linear gestaltet ist, und die andere Seite (22), die die Eintrittsöffnungen (24) der darin angeordneten Lichtleiter (21) aufweist, gekrümmt ausgebildet ist entsprechend der Krümmung der Schirmplatte (30, 31) der entsprechenden Kathodenstrahlröhre (12, 34).

5. Verfahren zur Vorbereitung einer in der Anzeigetafel (1) zu verwendenden Kathodenstrahlröhre (12, 34) gemäß Anspruch 4, dadurch gekennzeichnet, daß mehrere der keilförmigen optischen Elemente (20) mit Hilfe eines Klebemittels auf die Außenfläche (30, 31) der Kathodenstrahlröhre (12, 34), und zwar radial vom Zentrum (N) der Kathodenstrahlröhre (12, 34) zu deren Umfang, nebeneinander angebracht werden und daß die Enden (28) der einen Kreis (32) bildenden keilförmigen optischen Elemente (20) so geschnitten sind, daß sie ein Rechteck (33) bilden, das wenigstens einen Teil der Anzeigelücken (d) abdeckt, die die zugeordnete Kathodenstrahlröhre (12, 34) umgeben, wenn diese benachbart zu anderen Kathodenstrahlröhren (12, 34) der Anzeigetafel (1) angeordnet wird.

6. Optisches Element (20) gemäß Anspruch 4 zur Verwendung bei einer Anzeigetafel (1) nach einem der Ansprüche 1 bis 4.

## Revendications

1. Panneau d'affichage (1) comprenant une pluralité de tubes (12, 34) à rayonnement cathodique disposés adjacents, de façon que leurs surfaces d'affichage respectives (13) définissent ensemble une surface d'affichage (16) dudit panneau d'affichage (1), et qu'il apparaisse des discontinuités d'affichage (14, 15) formées en particulier par des espacements (d) entre les surfaces d'affichage (13) des tubes (12, 34) à rayonnement cathodique adjacents, dans lequel des guides de lumière (21) sont prévus sur la surface extérieure de la plaque frontale (30, 31) de chaque tube (12, 34) à rayonnement cathodique, de façon que la face d'entrée (24) de chaque guide de lumière (21) soit normale à une partie correspondante de la plaque frontale (30, 31) du tube (12, 34) à rayonnement cathodique correspondant, et que la face de sortie (25) de chaque guide de lumière (21) soit normale à une partie correspondante d'une surface (23, 26) transformée du panneau d'affichage constituée par les faces de sortie (25) de tous les guides de lumière (21), lesdits guides de lumière (21) étant conformés de manière que la surface transformée du panneau d'affichage soit continue pour l'essentiel.

2. Panneau d'affichage selon la revendication 1, caractérisé en ce que les guides de lumière (21) sont de forme sinueuse ou sous forme d'un S allongé.

3. Panneau d'affichage selon la revendication 1 ou la revendication 2, caractérisé en ce que lesdits guides de lumière (21) sont disposés radialement à partir du centre (N) de la plaque frontale (30, 31), en direction de la périphérie de la plaque frontale (30, 31), les épaisseurs des guides de lumière (21) augmentant le long de chaque rayon dans la direction de la périphérie de la plaque frontale (30, 31).

4. Panneau d'affichage selon la revendication 3, caractérisé en ce que les guides de lumière (21) prévus sur un rayon à partir du centre (N) de la plaque frontale correspondante (30, 31) jusqu'à la périphérie de ladite plaque sont contenus dans un élément optique (20) de section longitudinale à conformation biseautée un côté (23) dudit élément optique comprenant les faces de sortie (25) des guides de lumière (21) contenus à l'intérieur, étant linéaire, et l'autre côté (22) comprenant les faces d'entrée (24) des guides de lumière (21) contenus à l'intérieur, étant courbé en conformité avec la courbure de la plaque frontale (30, 31) du tube (12, 34) à rayonnement cathodique correspondant.

5. Procédé de fabrication d'un tube (12, 34) à rayonnement cathodique destiné à être utilisé dans un panneau d'affichage (1) selon la revendication 4, caractérisé en ce qu'une pluralité desdits éléments optiques (20) de conformation biseautée sont liés à la surface extérieure (30, 31) du tube (12, 34) à rayonnement cathodique au moyen d'un agent adhésif, de façon radiale depuis le centre (N) dudit tube (12, 34) à rayonnement cathodique jusqu'à sa périphérie, de façon juxtaposée, et en ce que les extrémités (28) desdits éléments optiques (20) de conformation biseautée qui forment un cercle (32) sont découpées de façon à former un rectangle (33) couvrant au moins une partie des discontinuités d'affichage (d) entourant le tube (12, 34) à rayonnement cathodique correspondant, lorsqu'ils sont placés au voisinage d'autres tubes (12, 34) à rayonnement cathodique du panneau d'affichage (1).

6. Un élément optique (20) tel que défini dans la revendication 4, desliné à être utilisé avec le panneau d'affichage (1) selon l'une quelconque des revendication 1 à 4.

FIG. 1.

FIG.2

FIG. 3

FIG. 4